# EUROPEAN PATENT APPLICATION

(11) **EP 3 182 791 A1**
(43) Date of publication of application: **21.06.2017**
(21) Application number: 14899671.3
(22) Date of filing: 31.12.2014
(51) Int. Cl.: H04W 88/04

(54) **TERMINAL-BASED COMMUNICATION METHOD AND TERMINAL**

(30) Priority: 15.08.2014 CN 201410402866
(71) Applicant: Yulong Computer Telecommunication Scientific (Shenzhen) Co., Ltd., Nanshan District Shenzhen, Guangdong 518057 (CN)
(72) Inventor: ZHANG, Yunfei, Shenzhen Guangdong 518057 (CN); ZHU, Yajun, Shenzhen Guangdong 518057 (CN); CAO, Yiqing, Shenzhen Guangdong 518057 (CN); FU, Ting, Shenzhen Guangdong 518057 (CN)
(74) Representative: Cordina, Kevin John
(86) International application number: PCT/CN2014/095980
(87) International publication number: WO 2016/023324

(57) **Abstract**

A communication method which is based on a terminal includes steps of establishing a connection between a designated terminal and a communication base station and/or a core network, to form a microcell base station. Data between another terminal and the communication base station and/or the core network through the microcell base station is exchanged. A terminal is also described. Quality of service and data security is enhanced and data transmission rates of data exchanged with the cellular network are increased.

## Description

### FIELD

The embodiments of the present disclosure relate to communication technology, and specifically to a terminal-based communication method and the terminal.

### BACKGROUND

In prior art, in order to further improve network capacity, miniaturization of base stations and density of network nodes have become an inevitable choice. However, when increasing system capacity, some problems are created, for example, that the locations of the base stations are difficult to determine, and power consumption of the base stations. Indoors, Wireless Local Area Network (WLAN) system can alleviate the above mentioned problems to a certain extent; and can provide high-speed transmission for indoor data.

In a current scenario of indoor coverage, costs of building a femtocell are relatively high, and scope of usage for indoor coverage is not large. Since the indoor WLAN system works in a unauthorized frequency band, guarantee of Quality of Service (QoS) cannot be satisfied. In addition, there are some security issues, and problems of exchanging with cellular systems and speed rates, thus a new way needs to be considered to solve the problems of indoor coverage by base stations.

Therefore, it is a problem to be solved on how to reduce the costs and expanding the scope of the indoor coverage, increase a data transmission rates in guarantee the quality of service and security at the same time.

### SUMMARY

Based on any one of the above mentioned technical problems, the present disclosure provides a new terminal-based communication method, ensuring both QoS and security. Exchanging with cellular networks, and at higher data transmission speeds are provided.

Accordingly, the present disclosure provides a terminal-based communication method. The communication method includes: establishing a connection between a designated terminal and a communication base station and/or a core network, to form a microcell base station based on the designated terminal; exchanging data between other terminal and the communication base station and/or the core network through the microcell base station.

In the above embodiment, by establishing the connection between the designated terminal and the communication base station and/or the core network to form the microcell base station, and exchanging data between the other terminal and the communication base station and/or the core network through the microcell base station, the designated terminal connected with the communication base station and/or the core network can exchange data with the communication base station and/or the core network, when a network state of an area that a plurality of terminals situated is poor (e.g., indoors), which can expand the scope of the network coverage to a certain extent and enhance the signal strength of network simultaneously. A poor quality of network signal caused by a large loss of mobile signal when reach indoor can be avoided, the quality of service and the security can be ensured, and the data transmission rate of the interaction with the cellular network can be improved. In addition, rather than strengthening the network courage by utilizing femtocells as in prior art, the present disclosure strengthens the network coverage by using intelligent terminals (such as smart phones), to reduce the cost effectively. The connection between the designated terminal and the communication base station and/or the core network can be wired connections, to ensure stability of communication.

In the above embodiment, before data is exchanged between the other terminal and the communication base station and/or the core network through the microcell base station, the method further requires the designated terminal to receive an access request from the other terminal, authenticating an identity of the other terminal by the designated terminal, to determine whether the other terminal is allowed to access the microcell base station.

In the above embodiment, a access request from the other terminal, by authenticating the identity of the other terminal to determine whether to allow the other terminal that sends the access request to access the microcell base station, illegal terminals can be prevented to access, and the security and privacy of the communication can be improved.

In the above embodiments, the step of exchanging data between the other terminal and the communication base station and/or the core network through the microcell base station includes: receiving first data sent from the other terminal by the designated terminal, marking the first data according to identification information of the other terminal, and sending the marked first data to the communication base station and/or the core network.

In the above embodiment, the communication base station and/or the core network can distinguish data sent from each individual terminal by receiving, marking, and forwarding the first data. The communication base station and/or the core network can process the data sent from each terminal according to the marking of the first data, thereby improving the reliability of data transmissions.

In the above embodiments, the step of exchanging data between other terminal and the communication base station and/or the core network through the microcell base station also includes: receiving second data sent from the communication base station and/or the core network by the designated terminal, and determining a target terminal to receive the second data according to a marking of the second data and the identification information of the other terminal, and sending the second data to the target terminal.

In the above embodiments, when the communication base station and/or the core network sends the data to the other terminal, the data sent to each corresponding terminal needs to be marked for ensuring that the designated terminal forwards the data to the corresponding terminal. When receiving data from the communication base station and/or the core network, the designated terminal can determine the target terminal according to the marking of the second data and the identification information of the other terminal, to send the data to the other terminal accurately.

In the above embodiments, the step of data between the other terminal and the communication base station and/or the core network through the microcell base station also includes: after receiving the data sent from the other terminal, the designated terminal processing the data sent from the other terminal by converting it to a format supported by the communication base station and/or the core network by the designated terminal, and sending the processed data to the communication base station and/or the core network.

In the above embodiments, the designated terminal processes the data into the format supported by the communication base station and/or the core network, thus the communication base station and/or the core network can process the data conveniently and the communication smooth and stability between the other terminal and the communication base stations and/or the core network can be ensured effectively.

In the above embodiments, the step of interacting data between the other terminal and the communication base station and/or the core network through the microcell base station includes: after receiving the data sent from the communication base station and/or the core network, processing the data sent from the communication base station and/or the core network by converting it to a format supported by the other terminal by the designated terminal, and sending the processed data to the other terminal.

In the above embodiment, similarly, the designated terminal processes the data to be in the format supported by the other terminal and sends the processed data, thus the other terminal can process the data conveniently, and the communication smooth and stability between the other terminal and the communication base station and/or the core network can be ensured effectively.

In the above embodiments, the step of interacting data between the other terminal and the communication base station and/or the core network through the microcell base station also includes: selecting a carrier wave corresponding to the other terminal to transmit communication data between the other terminal and the communication base station and/or the core network.

In the above embodiments, if the designated terminal supports a carrier aggregation technology and the other terminal supports a single carrier transmission capability, the designated terminal can provide a higher data speed rate for the other terminal via a carrier selection technology, thus it is convenient for data exchanging between the other terminal and the communication base station and/or the core network.

In the above embodiments, the communication method further includes: choosing any cell id as a virtual link tag by the designated terminal, and sending a downlink signal to exchange with the other terminal on specified time-frequency resources according to a predetermined period.

In the above embodiments, when a communication ability of the other terminal is strong, the designated terminal does not need to transmit part of the downlink signal or does not need to transmit over a longer period.

In the above embodiments, an upward communication mode between the designed terminal and the communication base stations and/or the core network can be same as or different from a downward communication mode between the designated terminal and the other terminal.

In the above embodiments, the designed terminal can connect with the communication base station and/or the core network through a wired interface or a wireless interface.

Accordingly, the present disclosure also provides a terminal, includes: a connection establishing unit, which is configured to establish a connection between a designated terminal and a communication base station and/or a core network, to form a microcell base station based on the designated terminal; an exchanging unit, which is configured to provide communication services for the other terminal, to exchange data with the communication base station and/or the core network through the microcell base station.

In the above embodiment, by establishing the connection between the designated terminal and the communication base station and/or the core network to form the microcell base station, and exchanging data between the other terminal and the communication base station and/or the core network through the microcell base station, the designated terminal connected with the communication base station and/or the core network can exchange data with the communication base station and/or the core network, when a network state of an area that a plurality of terminals situated is poor (e.g., indoors), which can expand the scope of the network coverage to a certain extent and enhance the signal strength of network simultaneously. A poor quality of network signal caused by a large loss of mobile signal when reach indoor can be avoided, the quality of service and the security can be ensured, and the data transmission rate of the interaction with the cellular network can be improved. In addition, rather than strengthening the network courage by utilizing femtocells as in prior art, the present disclosure strengthens the network coverage by using intelligent terminals (such as smart phones), to reduce the cost effectively. The connection between the designated terminal and the communication base station and/or the core network can be wired connections, to ensure stability of communication.

In the above embodiment, the terminal further includes: authentication unit, is configured to when the designated terminal receives an access request from the other terminal, authenticate an identity of the other terminal, to determine whether the other terminal is allowed to access the microcell base station.

In the above embodiment, a access request from the other terminal, by authenticating the identity of the other terminal to determine whether to allow the other terminal that sends the access request to access the microcell base station, illegal terminals can be prevented to access, and the security and privacy of the communication can be improved.

In the above embodiments, the exchanging unit includes: data receiving unit, which is configured to receive first data sent from the other terminal; processes unit, which is configured to mark the first data according to identification information of the other terminal, and data sending unit, which is configured to send the first data marked by the processes unit to the communication base station and/or the core network.

In the above embodiment, the communication base station and/or the core network can distinguish data sent from each individual terminal by receiving, marking, and forwarding the first data. The communication base station and/or the core network can process the data sent from each terminal according to the marking of the first data, thereby improving the reliability of data transmissions.

In the above embodiments, the data receiving unit, which is also configured to receive second data sent from the communication base station and/or the core network, the processes unit, which is also configured to determine a target terminal to receive the second data according to a marking of the second data and the identification information of the other terminal, the data sending unit, which is also configured to send the second data to the target terminal.

In the above embodiments, when the communication base station and/or the core network sends the data to the other terminal, the data sent to each corresponding terminal needs to be marked for ensuring that the designated terminal forwards the data to the corresponding terminal. When receiving data from the communication base station and/or the core network, the designated terminal can determine the target terminal according to the marking of the second data and the identification information of the other terminal, to send the data to the other terminal accurately.

In the above embodiments, the exchanging unit includes: data receiving unit, which is configured to receive the data sent from the other terminal, processes unit, which is configured to process the data sent from the other terminal by converting it to a format supported by the communication base station and/or the core network, data sending unit, which is configured to send the data processed by the processes unit to the communication base station and/or the core network.

In the above embodiments, the designated terminal processes the data into the format supported by the communication base station and/or the core network, thus the communication base station and/or the core network can process the data conveniently and the communication smooth and stability between the other terminal and the communication base stations and/or the core network can be ensured effectively.

In the above embodiments, the data receiving unit, which is configured to receive the data sent from the communication base station and/or the core network, the processes unit, which is configured to process the data sent from the communication base station and/or the core network by converting it to a format supported by the other terminal, and the data sending unit, which is configured to send the processed data to the other terminal.

In the above embodiment, similarly, the designated terminal processes the data to be in the format supported by the other terminal and sends the processed data, thus the other terminal can process the data conveniently, and the communication smooth and stability between the other terminal and the communication base station and/or the core network can be ensured effectively.

In the above embodiments, the exchanging unit, which is also configured to select a carrier wave corresponding to the other terminal to transmit communication data between the other terminal and the communication base station and/or the core network.

In the above embodiments, if the designated terminal supports a carrier aggregation technology and the other terminal supports a single carrier transmission capability, the designated terminal can provide a higher data speed rate for the other terminal via a carrier selection technology, thus it is convenient for data exchanging between the other terminal and the communication base station and/or the core network.

In the above embodiments, the exchanging unit, which is also configured to choose any cell id as a virtual link tag, and sending a downlink signal to exchange with the other terminal on specified time-frequency resources according to a predetermined period.

In the above embodiments, when a communication ability of the other terminal is strong, the designated terminal does not need to transmit part of the downlink signal or does not need to transmit over a longer period.

In the above embodiments, an upward communication mode between the exchanging unit and the communication base stations and/or the core network can be same with or different from a downward communication mode between the exchanging unit and the other terminal.

In the above embodiments, the connection establishing unit, is specific configured to connect with the communication base station and/or the core network through a wired interface or a wireless interface.

The above embodiments expand the scope of the indoor coverage to a certain extent and enhance the signal strength of network simultaneously. A poor quality of network signal caused by a large loss in mobile signal when reach indoor can be avoided. Quality of service and security are enhanced, and data transmission rates for cellular network interactions improved.

### BRIEF DESCRIPTION OF THE DRAWINGS

FIG. 1 shows a flowchart of one embodiment of a terminal-based communication method, according to the present disclosure;
FIG. 2 shows a schematic diagram of one embodiment of a terminal, according to the present disclosure;
FIG. 3 shows a schematic diagram of one embodiment of a terminal-based communication method in a scenario of indoor coverage according to the present disclosure;
FIG. 4 shows a schematic diagram of another embodiment of the communication method based on the terminal in the scenario of indoor coverage according to the present disclosure.

### DETAILED DESCRIPTION

For clarity of illustration of objectives, features and advantages of the present disclosure, the drawings combined with detailed description illustrate the embodiments of the present disclosure hereinafter. It is noted that embodiment of the present disclosure and features of the embodiments can be combined, when there is no complicit.

Various details are described in the following descriptions for better understanding of the present disclosure, however, the present disclosure may also be implemented in other ways other than those described herein. The scope of the present disclosure is not to be limited by the specific embodiments disclosed below.

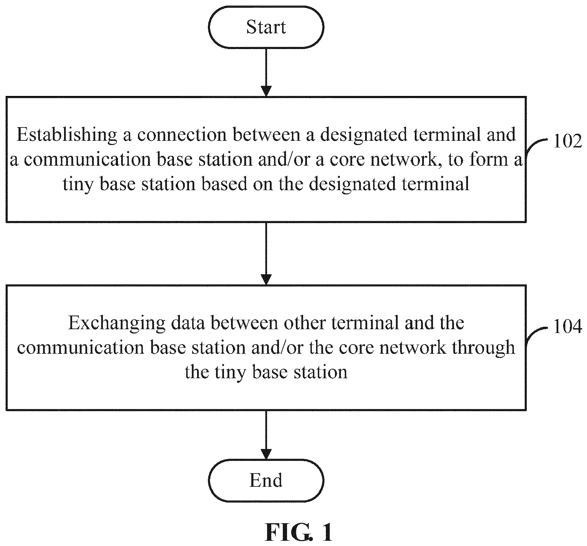

FIG. 1 shows a flowchart of one embodiment of a terminal-based communication method.

In FIG. 1, according to one embodiment of the present disclosure, the communication method based on a terminal includes: step 102, establishing a connection between a designated terminal and a communication base station and/or a core network, to form a microcell base station based on the designated terminal; step 104, exchanging data between other terminal and the communication base station and/or the core network through the microcell base station.

In the above embodiment, by establishing the connection between the designated terminal and the communication base station and/or the core network to form the microcell base station, and exchanging data between the other terminal and the communication base station and/or the core network through the microcell base station, the designated terminal connected with the communication base station and/or the core network can exchange data with the communication base station and/or the core network, when a network state of an area that a plurality of terminals situated is poor (e.g., indoors), which can expand the scope of the network coverage to a certain extent and enhance the signal strength of network simultaneously. A poor quality of network signal caused by a large loss of mobile signal when reach indoor can be avoided, the quality of service and the security can be ensured, and the data transmission rate of the interaction with the cellular network can be improved. In addition, rather than strengthening the network courage by utilizing femtocells as in prior art, the present disclosure strengthens the network coverage by using intelligent terminals (such as smart phones), to reduce the cost effectively. The connection between the designated terminal and the communication base station and/or the core network can be wired connections, to ensure stability of communication.

In the above embodiment, before data is exchanged between the other terminal and the communication base station and/or the core network through the microcell base station, the method further requires the designated terminal to receive an access request from the other terminal, authenticating an identity of the other terminal by the designated terminal, to determine whether the other terminal is allowed to access the microcell base station.

In the above embodiment, a access request from the other terminal, by authenticating the identity of the other terminal to determine whether to allow the other terminal that sends the access request to access the microcell base station, illegal terminals can be prevented to access, and the security and privacy of the communication can be improved.

In the above embodiments, the step of exchanging data between the other terminal and the communication base station and/or the core network through the microcell base station includes: receiving first data sent from the other terminal by the designated terminal, marking the first data according to identification information of the other terminal, and sending the marked first data to the communication base station and/or the core network.

In the above embodiment, the communication base station and/or the core network can distinguish data sent from each individual terminal by receiving, marking, and forwarding the first data. The communication base station and/or the core network can process the data sent from each terminal according to the marking of the first data, thereby improving the reliability of data transmissions.

In the above embodiments, the step of exchanging data between other terminal and the communication base station and/or the core network through the microcell base station also includes: receiving second data sent from the communication base station and/or the core network by the designated terminal, and determining a target terminal to receive the second data according to a marking of the second data and the identification information of the other terminal, and sending the second data to the target terminal.

In the above embodiments, when the communication base station and/or the core network sends the data to the other terminal, the data sent to each corresponding terminal needs to be marked for ensuring that the designated terminal forwards the data to the corresponding terminal. When receiving data from the communication base station and/or the core network, the designated terminal can determine the target terminal according to the marking of the second data and the identification information of the other terminal, to send the data to the other terminal accurately.

In the above embodiments, the step of data between the other terminal and the communication base station and/or the core network through the microcell base station also includes: after receiving the data sent from the other terminal, the designated terminal processing the data sent from the other terminal by converting it to a format supported by the communication base station and/or the core network by the designated terminal, and sending the processed data to the communication base station and/or the core network.

In the above embodiments, the designated terminal processes the data into the format supported by the communication base station and/or the core network, thus the communication base station and/or the core network can process the data conveniently and the communication smooth and stability between the other terminal and the communication base stations and/or the core network can be ensured effectively.

In the above embodiments, the step of interacting data between the other terminal and the communication base station and/or the core network through the microcell base station includes: after receiving the data sent from the communication base station and/or the core network, processing the data sent from the communication base station and/or the core network by converting it to a format supported by the other terminal by the designated terminal, and sending the processed data to the other terminal.

In the above embodiment, similarly, the designated terminal processes the data to be in the format supported by the other terminal and sends the processed data, thus the other terminal can process the data conveniently, and the communication smooth and stability between the other terminal and the communication base station and/or the core network can be ensured effectively.

In the above embodiments, the step of interacting data between the other terminal and the communication base station and/or the core network through the microcell base station also includes: selecting a carrier wave corresponding to the other terminal to transmit communication data between the other terminal and the communication base station and/or the core network.

In the above embodiments, if the designated terminal supports a carrier aggregation technology and the other terminal supports a single carrier transmission capability, the designated terminal can provide a higher data speed rate for the other terminal via a carrier selection technology, thus it is convenient for data exchanging between the other terminal and the communication base station and/or the core network.

In the above embodiments, the communication method further includes: choosing any cell id as a virtual link tag by the designated terminal, and sending a downlink signal to exchange with the other terminal on specified time-frequency resources according to a predetermined period.

In the above embodiments, when a communication ability of the other terminal is strong, the designated terminal does not need to transmit part of the downlink signal or does not need to transmit over a longer period.

In the above embodiments, an upward communication mode between the designed terminal and the communication base stations and/or the core network can be same as or different from a downward communication mode between the designated terminal and the other terminal.

In the above embodiments, the designed terminal can connect with the communication base station and/or the core network through a wired interface or a wireless interface.

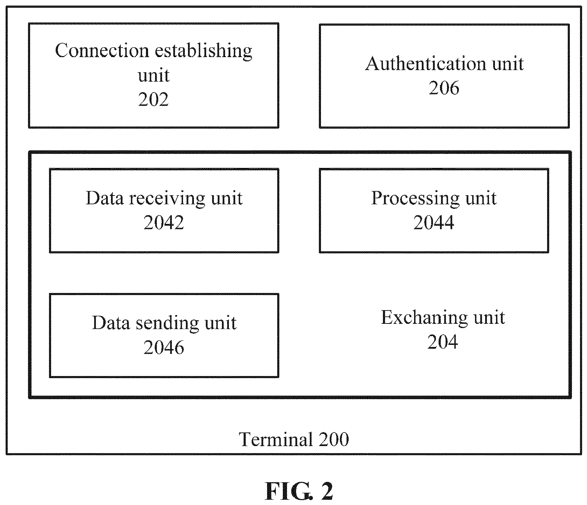

FIG. 2 shows one embodiment of a terminal according to the present disclosure.

As shown in FIG. 2, according to one embodiment of the present disclosure, a terminal 200 includes: a connection establishing unit 202, which is configured to establish a connection between a designated terminal and a communication base station and/or a core network, to form a microcell base station based on the designated terminal; an exchanging unit 204, which is configured to provide communication services for the other terminal, to exchange data with the communication base station and/or the core network through the microcell base station.

[0035][0051] In the above embodiment, by establishing the connection between the designated terminal and the communication base station and/or the core network to form the microcell base station, and exchanging data between the other terminal and the communication base station and/or the core network through the microcell base station, the designated terminal connected with the communication base station and/or the core network can exchange data with the communication base station and/or the core network, when a network state of an area that a plurality of terminals situated is poor (e.g., indoors), which can expand the scope of the network coverage to a certain extent and enhance the signal strength of network simultaneously. A poor quality of network signal caused by a large loss of mobile signal when reach indoor can be avoided, the quality of service and the security can be ensured, and the data transmission rate of the interaction with the cellular network can be improved. In addition, rather than strengthening the network courage by utilizing femtocells as in prior art, the present disclosure strengthens the network coverage by using intelligent terminals (such as smart phones), to reduce the cost effectively. The connection between the designated terminal and the communication base station and/or the core network can be wired connections, to ensure stability of communication.

In the above embodiment, the terminal 200 further includes: authentication unit 206, is configured to when the designated terminal receives an access request from the other terminal, authenticate an identity of the other terminal, to determine whether the other terminal is allowed to access the microcell base station.

In the above embodiment, a access request from the other terminal, by authenticating the identity of the other terminal to determine whether to allow the other terminal that sends the access request to access the microcell base station, illegal terminals can be prevented to access, and the security and privacy of the communication can be improved.

In the above embodiments, the exchanging unit 204 includes: data receiving unit 2042, which is configured to receive first data sent from the other terminal; processes unit 2044, which is configured to mark the first data according to identification information of the other terminal, and data sending unit 2046, which is configured to send the first data marked by the processes unit 2044 to the communication base station and/or the core network.

In the above embodiment, the communication base station and/or the core network can distinguish data sent from each individual terminal by receiving, marking, and forwarding the first data. The communication base station and/or the core network can process the data sent from each terminal according to the marking of the first data, thereby improving the reliability of data transmissions.

In the above embodiments, the data receiving unit 2042, which is also configured to receive second data sent from the communication base station and/or the core network, the processes unit 2044, which is also configured to determine a target terminal to receive the second data according to a marking of the second data and the identification information of the other terminal, the data sending unit 2046, which is also configured to send the second data to the target terminal.

In the above embodiments, when the communication base station and/or the core network sends the data to the other terminal, the data sent to each corresponding terminal needs to be marked for ensuring that the designated terminal forwards the data to the corresponding terminal. When receiving data from the communication base station and/or the core network, the designated terminal can determine the target terminal according to the marking of the second data and the identification information of the other terminal, to send the data to the other terminal accurately.

In the above embodiments, the exchanging unit 204 includes: data receiving unit 2042, which is configured to receive the data sent from the other terminal, processes unit 2044, which is configured to process the data sent from the other terminal by converting it to a format supported by the communication base station and/or the core network, data sending unit 2046, which is configured to send the data processed by the processes unit 2044 to the communication base station and/or the core network.

In the above embodiments, the designated terminal processes the data into the format supported by the communication base station and/or the core network, thus the communication base station and/or the core network can process the data conveniently and the communication smooth and stability between the other terminal and the communication base stations and/or the core network can be ensured effectively.

In the above embodiments, the data receiving unit 2042, which is configured to receive the data sent from the communication base station and/or the core network, the processes unit 2044, which is configured to process the data sent from the communication base station and/or the core network by converting it to a format supported by the other terminal, and the data sending unit 2046, which is configured to send the processed data to the other terminal.

In the above embodiment, similarly, the designated terminal processes the data to be in the format supported by the other terminal and sends the processed data, thus the other terminal can process the data conveniently, and the communication smooth and stability between the other terminal and the communication base station and/or the core network can be ensured effectively.

In the above embodiments, the exchanging unit 204, which is also configured to select a carrier wave corresponding to the other terminal to transmit communication data between the other terminal and the communication base station and/or the core network.

In the above embodiments, if the designated terminal supports a carrier aggregation technology and the other terminal supports a single carrier transmission capability, the designated terminal can provide a higher data speed rate for the other terminal via a carrier selection technology, thus it is convenient for data exchanging between the other terminal and the communication base station and/or the core network.

In the above embodiments, the exchanging unit 204, which is also configured to choose any cell id as a virtual link tag, and sending a downlink signal to exchange with the other terminal on specified time-frequency resources according to a predetermined period.

In the above embodiments, when a communication ability of the other terminal is strong, the designated terminal does not need to transmit part of the downlink signal or does not need to transmit over a longer period.

In the above embodiments, an upward communication mode between the exchanging unit 204 and the communication base stations and/or the core network can be same with or different from a downward communication mode between the exchanging unit 204 and the other terminal.

In the above embodiments, the connection establishing unit 202, is specific configured to connect with the communication base station and/or the core network through a wired interface or a wireless interface.

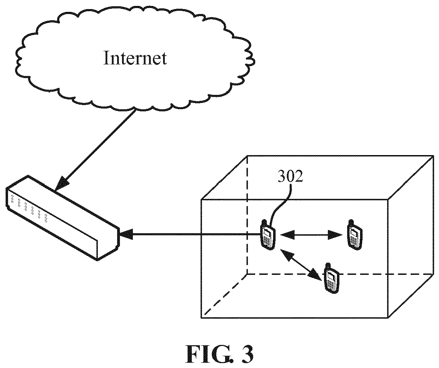

Combining with FIG. 3 to FIG.4, the technical solution of the present disclosure is described detailed below.

Using an indoor scenario as an example, a solution is provided below:

Considering the indoor scenario, the quality of the mobile signals from outdoors may be poor due to a factor such as blocking of wall. n order to further improve the effect of the indoor coverage and improve the data rate of the indoor terminal, a new terminal according to the present disclosure

One of the indoor terminals has functions of the base station, and can be called a terminal based-small cell (T-SC). The T-SC can be selected according to a variety of factors, such as the communication modes which it supports, a terminal capacity, a number of antennas, a handling capacity, and so on. The T-SC should have all of or part of the following abilities.
1), the T-SC is equipment having an ability supported by all general terminals, that is to say, the T-SC can be regarded as a general terminal working under a supported network.
2), the T-SC can support multiple communication modes, which include, but are not limited to, the existing mobile communication modes, for example, Global System for Mobile Communications (GSM), Wideband Code Division Multiple Access (WCDMA), Code Division Multiple Access 2000 (CDMA2000), Time Division-Synchronization Code Division Multiple Access (TD-SCDMA), Frequency Division Long Term Evolution (FD-LTE), Time Division Long Term Evolution (TD-LTE), and so on.
3), the T-SC has all the L1 layer functions of a general terminal, that is to say, the T-SC can be a base station for receiving data from the other general terminal. It is noted that the T-SC does not need to process data in a complex manner after receiving the data from the other general terminal. The T-SC only labels information from the other general terminal, to identify the source terminal of the information.
4), the T-SC has a variety of interfaces, which include, but are not limited to, a wireless interface, an optical interface, and a common ADSL interface.
5), the T-SC can be implemented based on an arm architecture. The reason why the T-SC can be implemented based on the arm architecture is that the T-SC only implements functions of a simplified base station.
6), the T-SC can have a function of authentication.

In the embodiment of the indoor scenario as showed in FIG. 3, mobile signal may be unable to penetrate indoors, or be weak on arrival due to the penetration loss of wall. There are multiple terminals which need to exchange data with the network. In this scenario, as a T-SC terminal 302 can connect to the indoor network by the wired interface such as the optical fiber interface. In the meantime, the T-SC can serve as a small base station for the other terminals.

The T-SC can choose a random ID as its VCID (virtual ID). The ID can be randomly selected from cell IDs supported by the current agreement, and can send an appropriate synchronization channel, system information, and other necessary downlink signal to ensure backward compatibility.

The other terminals can send an access request and a subsequent data transmission procedure to the designated terminal, by a traditional communication procedure.

After the T-SC receives the access request from the terminal, the T-SC can determine whether the terminal sent the access request is a trusted terminal via the function of authentication, to decide whether to allow the terminal access.

Since this is the indoor scenario, the number of users, channel conditions, and other factors are stable relatively, so that the T-SC can decide not to implement some functions of base stations. Such functions may be interference avoidance, a complex scheduling algorithm, a function of radio resource management (RRM), etc. Even if the service terminal is a terminal which has a high capability, part of the downlink information is not transferred or is transmitted over a longer period.

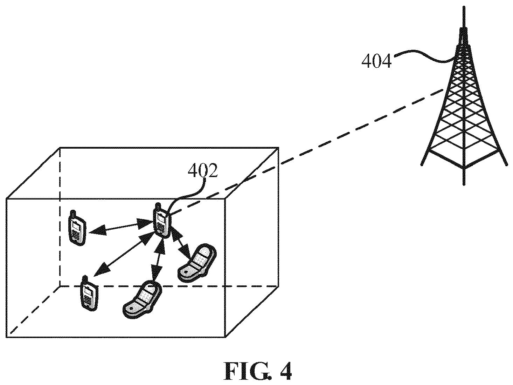

In another embodiment of the indoor scenario as shown in FIG. 4, a T-SC terminal 402 supports an LTE system, while the other terminal supports the 3rd Generation Telecommunication (3G) system. To improve the data rates of the other terminal, following processes are applied.
1), the T-SC terminal invokes partial functions of the 3G base station.
2), the other terminal accesses the T-SC and exchanges data with the T-SC terminal.
3), the T-SC terminal processes data from the other terminal into packets for LTE transmission. Rate matching, coding methods, and other processes can be applied to make packet-size in compliance with the LTE system, and the packet is sent to the LTE macro base station 404.

Based on the assumption in the same way, if the T-SC terminal shown in figure 4 is a terminal having a higher ability of the LTE, such as a CAT8 terminal, the other terminal is a terminal having a lower ability of the LTE, such as a CAT5 terminal. As the designed terminal supports carrier aggregation technology and the other terminal supports single carrier transmission capability, the designated terminal can provide a higher data rate for the other terminal via a carrier selection technology.

The indoor scenario is taken only as example to introduce the present document in detail. It will be understood by those of ordinary skill in the art that the embodiments described herein not only can be applied in the indoor scenario, but also in other scenarios, to expand the coverage of the network signal and enhance the strength of the network signal.

The present disclosure has been explicated above by referring to the drawings. The present disclosure provides a terminal-based communication method, which can ensure the quality of service and ensure the security, and improve the interaction of cellular network and data transmission speed, and it can effectively reduce the cost at the same time.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A terminal-based communication method, comprising:
establishing a connection between a designated terminal and a communication base station and/or a core network, to form a microcell base station based on the designated terminal;
exchanging data between other terminal and the communication base station and/or the core network through the microcell base station.

2. The communication method of claim 1, wherein before exchanging data between the other terminal and the communication base station and/or the core network through the microcell base station, the method further comprises:
when receiving an access request from the other terminal, authenticating an identity of the other terminal by the designated terminal, to determine whether the other terminal is allowed to access the microcell base station.

3. The communication method of claim 1, wherein the step of exchanging data between the other terminal and the communication base station and/or the core network through the microcell base station comprises:
receiving first data sent from the other terminal by the designated terminal;
marking the first data according to identification information of the other terminal, and
sending the marked first data to the communication base station and/or the core network.

4. The communication method of claims 3, wherein the step of exchanging data between the other terminal and the communication base station and/or the core network through the microcell base station comprises:
receiving second data sent from the communication base station and/or the core network by the designated terminal,
determining a target terminal to receive the second data according to a marking of the second data and the identification information of the other terminal,
sending the second data to the target terminal.

5. The communication method of claim 1, wherein the step of the step of exchanging data between the other terminal and the communication base station and/or the core network through the microcell base station comprises:
processing the data sent from the other terminal by converting it to a format supported by the communication base station and/or the core network by the designated terminal, after receiving the data sent from the other terminal;
sending the processed data to the communication base station and/or the core network.

6. The communication method of claim 5, wherein the step of the step of exchanging data between the other terminal and the communication base station and/or the core network through the microcell base station comprises:
processing the data sent from the communication base station and/or the core network by converting it to a format supported by the other terminal by the designated terminal, after receiving the data sent from the communication base station and/or the core network;
sending the processed data to the other terminal.

7. The communication method of claim 1, wherein the step of the step of exchanging data between the other terminal and the communication base station and/or the core network through the microcell base station comprises:
selecting a carrier wave corresponding to the other terminal to transmit communication data between the other terminal and the communication base station and/or the core network.

8. The communication method of any one of claims 1 to 7, wherein the method further comprises:
choosing any cell id as a virtual link tag by the designated terminal;
sending a downlink signal to exchange with the other terminal on specified time-frequency resources according to a predetermined period.

9. The communication method of any one of claims 1 to 7, wherein the method further comprises:
an upward communication mode between the designed terminal and the communication base stations and/or the core network can be same with or different from a downward communication mode between the designed terminal and the other terminal.

10. The communication method of any one of claims 1 to 7, wherein the connection between a designated terminal and a communication base station and/or a core network through a wired interface or a wireless interface.

11. A terminal, comprising:
connection establishing unit, is configured to establish a connection between a designated terminal and a communication base station and/or a core network, to form a microcell base station based on the designated terminal;
exchanging unit, is configured to provide communication services for the other terminal, to exchange data with the communication base station and/or the core network through the microcell base station.

12. The terminal of claim 11, wherein the terminal further comprises:
authentication unit, is configured to when the designated terminal receive an access request from the other terminal, authenticating an identity of the other terminal, to determine whether the other terminal is allowed to access the microcell base station.

13. The terminal of claim 11, wherein the exchanging unit comprises:
data receiving unit, which is configured to receive first data sent from the other terminal;
processes unit, which is configured to mark the first data according to identification information of the other terminal,
data sending unit, which is configured to send the first data marked by the processes unit to the communication base station and/or the core network.

14. The terminal of claims 13, wherein the data receiving unit, which is also configured to receive second data sent from the communication base station and/or the core network, the processes unit, which is also configured to determine a target terminal to receive the second data according to a marking of the second data and the identification information of the other terminal, the data sending unit, which is also configured to send the second data to the target terminal.

15. The terminal of claim 11, wherein the exchanging unit includes: data receiving unit, which is configured to receive data sent from the other terminal, processes unit, which is configured to process the data sent from the other terminal by converting it to a format supported by the communication base station and/or the core network, data sending unit, which is configured to send the data processed by the processes unit to the communication base station and/or the core network.

16. The terminal of claim 15, wherein the data receiving unit, which is configured to receive the data sent from the communication base station and/or the core network, the processes unit, which is configured to process the data sent from the communication base station and/or the core network by converting it to a format supported by the other terminal by the designated terminal, and the data sending unit, which is configured to send the processed data to the other terminal.

17. The terminal of claim 11, wherein the exchanging unit, which is also configured to select a carrier wave corresponding to the other terminal to transmit communication data between the other terminal and the communication base station and/or the core network.

18. The terminal of any one of claims 11 to 17, wherein the exchanging unit, which is also configured to choose any cell id as a virtual link tag by the designated terminal, and sending a downlink signal to exchange with the other terminal on specified time-frequency resources according to a predetermined period.

19. The terminal of any one of claims 11 to 17, wherein an upward communication mode between the exchanging unit and the communication base stations and/or the core network can be same with or different from a downward communication mode between the exchanging unit and the other terminal.

20. The terminal of any one of claims 11 to 17, wherein the connection establishing unit, is specific configured to connect with the communication base station and/or the core network through a wired interface or a wireless interface.
